# EUROPÄISCHE PATENTANMELDUNG

(11) **EP 0 650 808 A1**
(43) Veröffentlichungstag der Anmeldung: **03.05.1995**
(21) Anmeldenummer: 94116220.8
(22) Anmeldetag: 14.10.1994
(51) Int. Cl.: B24D 3/34, B24D 3/28, C09K 3/14

(54) **Schleifaktiver Füllstoff für Schleifwerkzeuge, seine Verwendung und den Füllstoff enthaltendes Schleifwerkzeug**

(30) Priorität: 28.10.1993 DE 4336755
(71) Anmelder: FIRMA AUGUST RÜGGEBERG, D-51709 Marienheide (DE)
(72) Erfinder: Sinram, Diethard, Dr., D-58540 Meinerzhagen (DE); Schneider, Theodor, Dipl.-Ing., D-42699 Solingen (DE); Stuckenholz, Bernd, Dipl.-Ing. Dr., D-51674 Wiehl (DE); Alfer, Peter, Dipl.-Ing., D-51688 Wipperfürth (DE)
(74) Vertreter: Rau, Manfred, Dr. Dipl.-Ing.

(57) **Zusammenfassung**

Schleifwerkzeuge weisen üblicherweise einen schleifaktiven Füllstoff (8) auf. Es wird vorgeschlagen, als schleifaktiven Füllstoff (8) zumindest weitestgehend magnesiumfreies Natriumchlorid einzusetzen, das nicht hygroskopisch ist, wobei bevorzugt das Natriumchlorid (9) durch eine Beschichtung (10) mit einem Kunstharz vor Anlösung durch Wasser geschützt wird.

## Beschreibung

Die Erfindung betrifft einen schleifaktiven Füllstoff für Schleifwerkzeuge, die Verwendung dieses Füllstoffes und das Schleifwerkzeug, das diesen Füllstoff enthält.

Schleifscheiben, z.B. Trenn-Schleifscheiben bestehen üblicherweise aus Schleifkorn, Bindemittel und schleifaktiven Füllstoffen und gegebenenfalls einer Armierung. Schleifaktive Füllstoffe tragen zum Schleifvorgang bei, wobei allerdings der Wirkungsmechanismus nicht ausreichend geklärt ist. Sie tragen jedenfalls dazu bei, eine übermäßige Abnutzung der Schleifscheibe zu vermindern und eine gute Schnittqualität zu erreichen. Sie verhindern auch eine übermäßige Erzeugung von Wärme im Bereich der Schnittstelle.

Als schleifaktiver Füllstoff ist Kryolith (Na₃AlF₆) sehr verbreitet. Es wird die Meinung vertreten, daß Kryolith bei Langzeiteinwirkung gesundheitsgefährdend sein könnte.

Aus der EP 0 008 697 A1 ist es bekannt geworden, als nichttoxischen aktiven Füllstoff für Schleifscheiben Alkalichloroferrate (II, III) einzusetzen. Die Herstellung derartiger Füllstoffe ist mit einigem Aufwand verbunden.

Aus der US-PS 2 216 135 ist es weiterhin bereits bekannt, nicht wasserhaltige, aber wasserlösliche, nicht oxidierende anorganische Alkali- und Erdalkalisalze als aktive Füllstoffe zu verwenden. Insbesondere sind hierbei auch Kochsalz oder Steinsalz vorgeschlagen worden. Dies hat sich nicht durchsetzen können.

Der Erfindung liegt die Aufgabe zugrunde, einen schleifaktiven Füllstoff für Schleifwerkzeuge anzugeben, der nichttoxisch und kostengünstig darstellbar ist.

Diese Aufgabe wird erfindungsgemäß durch die Merkmale des Anspruches 1 gelöst. Das erfindungsgemäß ausgewählte Natriumchlorid ist nicht hygroskopisch. Im großen und ganzen soll das Natriumchlorid chemisch rein sein; insbesondere ist aber wesentlich, daß es praktisch magnesiumfrei ist, wobei für den Magnesiumgehalt eine im Anspruch 2 angegebene obere Grenze gilt.

Besonders vorteilhaft ist eine Ausgestaltung nach Anspruch 3, da in diesem Falle das Natriumchlorid durch die Beschichtung nicht oder weitestgehend nicht angelöst werden kann. Das Beschichtungsmaterial, bei dem es sich nach Anspruch 4 um Phenolharz, und zwar sowohl um modifiziertes als auch um unmodifiziertes Phenolharz oder um Harze nach Anspruch 5 handelt, kann gleichzeitig zumindest teilweise die Funktion des Bindemittels für ein Schleifwerkzeug übernehmen.

Anspruch 6 gibt einen bevorzugten Bereich für die Körnung des Natriumchlorids an, während Anspruch 7 einen bevorzugten Bereich für die Schichtdicke des Beschichtungsmaterials auf den einzelnen Natriumchlorid-Körnern angibt.

In Anspruch 8 ist die Verwendung des Füllstoffes nach einem der Ansprüche 1 bis 6 wiedergegeben, während im Anspruch 9 ein einen derartigen Füllstoff enthaltendes Schleifwerkzeug unter Schutz gestellt wird.

Weitere Merkmale, Vorteile und Einzelheiten der Erfindung ergeben sich aus der nachfolgenden Beschreibung eines Ausführungsbeispieles anhand der Zeichnung. Es zeigt
- Fig. 1: ein als Trenn-Schleifscheibe ausgebildetes Schleifwerkzeug im Querschnitt,
- Fig. 2: einen Teilausschnitt aus Fig. 1 in vergrößertem Maßstab und
- Fig. 3: ein mit Kunstharz ummanteltes Natriumchlorid-Korn.

Die in der Zeichnung dargestellte Trenn-Schleifscheibe 1 ist ringzylinderförmig ausgebildet. Sie weist eine kreisförmige Ausnehmung 2 auf, die konzentrisch zur Mittel-Längs-Achse 3 angeordnet ist und zur Aufnahme für die Antriebswelle einer Schleifmaschine dient.

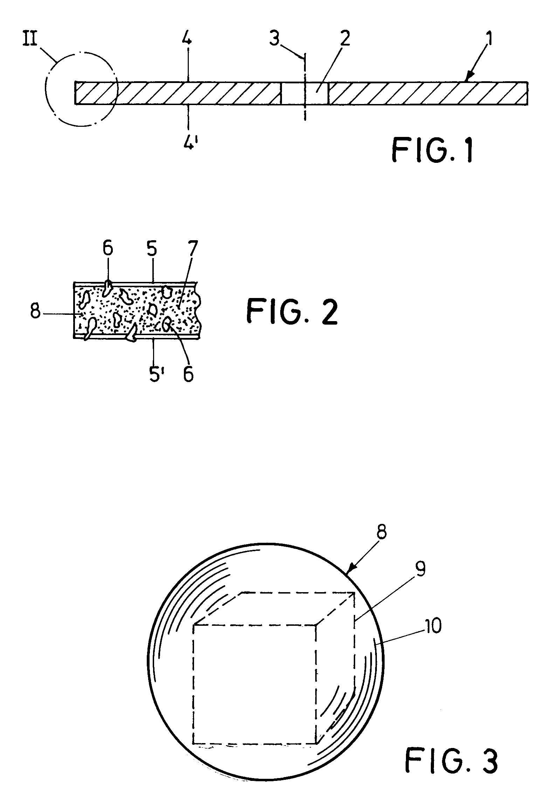

Die Schleifscheibe 1 hat - wie Fig. 2 erkennen läßt - einen üblichen Grundaufbau, d.h. sie weist im Bereich ihrer Stirnseiten 4, 4' jeweils eine Armierungslage 5, 5' auf. Auf den Armierungslagen 5, 5' befinden sich Schleifkorn 6, bevorzugt aus Aluminiumoxid, Siliziumkarbid, Zirkonkorund, Solgel-Korn oder Gemischen hieraus, und Bindemittel 7 in Form reiner oder modifizierter Kunstharze und schleifaktiver Füllstoff 8. Der Aufbau der Schleifscheibe hat keinerlei beschränkende Wirkung; ihre Beschreibung dient nur zur Veranschaulichung.

Als Füllstoff 8 wird Natriumchlorid mit einer Korngröße im Bereich von 5 bis 1000 µm eingesetzt. Dieses Natriumchlorid ist im Grundsatz chemisch rein; auf jeden Fall übersteigt sein Magnesiumgehalt nicht 5 ppm.

Die als Füllstoff 8 dienenden einzelnen Natriumchlorid-Körner 9 sind - wie Fig. 3 entnehmbar ist - jeweils mit einer dünnen Schicht 10 von Kunstharz, z.B. Phenolharz, umgeben. Die Schichtdicke dieser Beschichtung liegt zwischen 1 und 100 µm. Das beschichtete Natriumchlorid ist rieselfähig. Das Phenolharz befindet sich im B-Zustand, d.h. es ist trocken aber nicht ausgehärtet. Das Aushärten, d.h. die Überführung in den C-Zustand erfolgt bei der späteren Wärmebehandlung des Schleifwerkzeuges. Die Beschichtung der Natriumchlorid-Körner 9 mittels des Phenolharzes erfolgt nach einem Verfahren, wie es für die Beschichtung von Formsand zur Verwendung in Gießereien bekannt ist.

Das rieselfähige beschichtete Natriumchlorid ist zum einen wegen seiner weitgehenden Magnesiumfreiheit nicht hygroskopisch und wegen der Beschichtung mit Kunstharz auch weitgehend vor Anlösung durch Wasser geschützt. Es ist rieselfähig und unter Wärme und/oder Druck noch verformbar und/oder verbindbar.

Die Herstellung der als Trenn-Schleifscheibe ausgebildeten Schleifscheibe 1 erfolgt in üblicher, nachfolgend anhand eines Beispieles erläuterter Weise:
Es wird eine Armierungslage 5 in eine Preß-Form eingelegt. Anschließend wird ein aus Schleifkorn 6, Füllstoff 8 und gegebenenfalls noch zusätzlichem Bindemittel 7 bestehendes Schleifgranulat in die Preß-Form eingegeben und eine weitere Armierungslage 5' aufgelegt. Auf dieses Paket wird dann ein Druck von 500 bis 4000 N/cm² ausgeübt, wodurch die Schleifscheibe 1 verdichtet wird. Bei diesem Verdichten tritt bereits eine Klebeverbindung ein, die als Grünfestigkeit bezeichnet wird. Bei diesem Verpressen drückt sich das Schleifgranulat, also Schleifkorn 6 und Füllstoff 8 und gegebenenfalls Bindemittel 7 jeweils durch die Armierungslage 5 bzw. 5' nach außen durch.

Diese verdichteten aber noch nicht ausgehärteten Trenn-Schleifscheiben werden zwischen Stahlplatten gestapelt und zum Aushärten in einen Ofen gegeben, wo sie je nach gewünschtem Härtegrad Temperaturen von 120°C bis 200°C ausgesetzt werden.

## Patentansprüche

1. Schleifaktiver Füllstoff für Schleifwerkzeuge, dadurch gekennzeichnet, daß er aus weitgehend magnesiumfreiem Natriumchlorid besteht.

2. Füllstoff nach Anspruch 1, dadurch gekennzeichnet, daß er einen Magnesiumgehalt von nicht mehr als 5 ppm aufweist.

3. Füllstoff nach Anspruch 1 oder 2, dadurch gekennzeichnet, daß die Natriumchlorid-Körner (9) mit einem Kunstharz beschichtet sind.

4. Füllstoff nach Anspruch 3, dadurch gekennzeichnet, daß die Natriumchlorid-Körner (9) mit einem Phenolharz beschichtet sind.

5. Füllstoff nach Anspruch 3, dadurch gekennzeichnet, daß die Natriumchlorid-Körner (9) mit modifiziertem Phenolharz oder Epoxidharz beschichtet sind.

6. Füllstoff nach einem der Ansprüche 1 bis 5, dadurch gekennzeichnet, daß die Natriumchlorid-Körner (9) eine Körnung im Bereich von 5 bis 1000 µm aufweisen.

7. Füllstoff nach einem der Ansprüche 3 bis 6, dadurch gekennzeichnet, daß die Beschichtung der Natriumchlorid-Körner (9) eine Schichtdicke von 1 bis 100 µm hat.

8. Verwendung eines schleifaktiven Füllstoffes nach einem der Ansprüche 1 bis 7 als Füllstoff für Schleifwerkzeuge.

9. Schleifwerkzeug für Schleifmaschinen, mit einem Schleifkorn (6), Füllstoff (8) und gegebenenfalls Bindemittel (7) und gegebenenfalls mindestens einer Armierungslage (5, 5') aufweisenden Schleifkörper, dadurch gekennzeichnet, daß der Füllstoff (8) durch zumindest weitgehend magnesiumfreies Natriumchlorid nach einem der Ansprüche 1 bis 7 gebildet ist.
